Europäisches Patentamt

European Patent Office

Office européen des brevets

(11) Numéro de publication: **0 213 002**
**B1**

(12) **FASCICULE DE BREVET EUROPEEN**

(45) Date de publication du fascicule du brevet: **04.04.90**

(51) Int. Cl.⁵: **F 16 D 23/14**

(21) Numéro de dépôt: **86401445.1**

(22) Date de dépôt: **30.06.86**

(54) **Montage de butée de débrayage.**

(30) Priorité: **15.07.85 FR 8510799**

(43) Date de publication de la demande:
**04.03.87 Bulletin 87/10**

(45) Mention de la délivrance du brevet:
**04.04.90 Bulletin 90/14**

(84) Etats contractants désignés:
**DE GB IT**

(56) Documents cités:
**EP-A-0 153 087**
**FR-A-2 545 172**

(73) Titulaire: **VALEO**
**64 Avenue de la Grande Armée**
**F-75017 Paris (FR)**

(72) Inventeur: **Gay, Christian**
**36 rue Labat**
**F-75018 Paris (FR)**
Inventeur: **Lassiaz, Philippe**
**19 rue Thiers**
**F-92100 Boulogne (FR)**

(74) Mandataire: **Lemaire, Marc**
**Société VALEO Département Propriété**
**Industrielle 21, rue Blanqui**
**F-93406 Saint-Ouen (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne d'une manière générale les butées de débrayage, notamment pour véhicules automobiles.

Elle vise plus particulièrement une butée de débrayage, dite tirée, du type agissant en traction sur un dispositif débrayeur d'un embrayage à commander, par exemple les extrémités des doigts d'un diaphragme, et qui, pour ce faire, doit être attelée à celui-ci.

Il a été proposé à cet effet dans la demande de brevet français 2 545 172, déposée le 26 avril 1983 sous le numéro 83 06847, un montage de butée de débrayage mettant en oeuvre entre la butée de débrayage et le dispositif débrayeur à commander une pièce, dite ici pièce d'accostage, et des moyens de solidarisation en traction qui, établis entre la pièce d'accostage et une pièce, dite ici pièce d'attaque, appartenant à la butée de débrayage, sont propres à assurer une liaison axiale entre lesdites pièces allant du dispositif débrayeur à ladite butée de débrayage.

On a déjà proposé dans ce sus-mentionné document des moyens de solidarisation en traction qui comportent, d'une part, un organe de couplage élastiquement déformable radialement, engagé, au moins partiellement, dans une gorge annulaire de retenue ménagée dans la pièce d'attaque et, d'autre part, une portée d'entraînement et des picots ménagés pour ledit organe de couplage dans la pièce d'accostage; lesdits picots étant à l'opposé de la portée d'entraînement par rapport audit organe de couplage.

Une telle disposition permet, grâce aux picots, un désaccouplement en aveugle, c'est-à-dire un désaccouplement sans intervention directe de l'opérateur sur les picots, de la butée de débrayage et de la pièce d'accostage et ceci sans déposer l'embrayage du plateau de réaction que comporte l'embrayage.

Bien que donnant satisfaction, cette réalisation nécessite de prendre des précautions pour limiter le mouvement d'engagement de la butée de débrayage au cours du montage afin que l'organe de couplage ne soit pas éjecté par les picots et c'est la raison pour laquelle on a prévu un moyen de limitation du mouvement sous la forme par exemple de cales, ce qui entraîne un surcroît de manipulation de l'opérateur.

Il est également décrit dans la demande européenne EP—A—0 153 087 un montage muni de moyens de solidarisation en traction comportant un organe de couplage déformable, grâce à des doigts, en saillie radiale à l'état libre et apte à rotuler sur un support en forme d'anneau rigide, ce qui nécessite de créer des sièges d'articulation auxdits doigts.

La présente invention a pour objet de pallier ces inconvénients et donc de créer une disposition permettant de manière simple et économique un désaccouplement en aveugle de la butée de débrayage et de la pièce d'accostage sans nécessiter de limiter avec précision le mouvement d'engagement de la butée de débrayage au cours du montage et tout en procurant d'autres avantages.

L'invention propose à cet effet un montage de butée de débrayage, du genre comportant, pour l'attelage d'une butée de débrayage au dispositif débrayeur d'un embrayage, une pièce, dite ici pièce d'accostage, qui est convenablement rapportée sur ledit dispositif débrayeur, et des moyens de solidarisation en traction, qui, établis entre ladite pièce d'accostage et une pièce, dite ici pièce d'attaque, appartenant à la butée de débrayage, sont propres à assurer une liaison axiale entre lesdites pièces, pièce d'accostage et pièce d'attaque dans le sens axial, allant du dispositif débrayeur à ladite butée de débrayage, lesdits moyens de solidarisation en traction comportant, d'une part, un organe de couplage déformable, qui est, au moins partiellement engagé radialement dans une gorge ménagée pour lui sur l'une des pièces, pièce d'accostage ou pièce d'attaque, en faisant saillie radialement vis-à-vis de ladite pièce, à l'état libre, et d'autre part, une portée d'entraînement qui est ménagée globalement transversalement sur l'autre des pièces, et avec laquelle ledit organe de couplage coopère axialement en appui dans le sens considéré, caractérisé en ce que l'organe de couplage comprend une rondelle élastique, comprenant une périphérie radialement externe et une périphérie radialement interne, apte à prendre au moins deux configurations, la première pour laquelle elle est globalement convexe, pour le sens axiale d'observation allant du dispositif débrayeur à ladite butée, l'autre pour laquelle elle est globalement concave, pour le même sens axial d'observation et des moyens de retournement aptes à faire passer ladite rondelle, d'une configuration, permettant la liaison axiale entre lesdites pièces, à une autre configuration, permettant le désaccouplement entre ces pièces.

Grâce à cette disposition, il suffit, au montage, d'engager ladite butée de débrayage dans l'ouverture centrale dudit dispositif débrayeur; au cours d'un tel engagement, les moyens de solidarisation s'effacent élastiquement sous l'action de la portée d'engagement et prennent ensuite une configuration, entre les portées avec lesquelles ils doivent coopérer, nécessaire pour la solidarisation axiale entre ladite pièce d'accostage et ladite butée de débrayage.

Grâce à l'invention, le montage de butée est réarmable, c'est-à-dire en cas d'une surcourse trop importante lors du montage, après dépassement de la portée de retournement, l'opérateur peut effectuer un mouvement en sens inverse et recommencer l'opération en aveugle.

Suivant une autre caractéristique, ladite rondelle élastique présente au moins deux doigts, dits doigts de retournement, saillant par rapport à l'une au moins de ses périphéries.

Suivant une autre caractéristique, ladite rondelle élastique présente au moins deux doigts, dits doigts de pivotement, saillant par rapport à l'une au moins de ses périphéries.

Suivant une autre caractéristique, des éléments, dits éléments de retenue, sont portés par les doigts de retournement et/ou de pivotement et sont destinés à coopérer avec des portées ménagées sur chacune des pièces.

Suivant une autre caractéristique, lesdits doigts sont de raideur supérieure à l'âme élastique que présente ladite rondelle élastiquement déformable.

Suivant une autre caractéristique lesdits doigts de pivotement font saillie de la périphérie de la rondelle opposée à celle de la périphérie qui porte lesdits doigts de retournement.

Suivant une autre caractéristique lesdits doigts de pivotement sont d'un seul tenant avec lesdits doigts de retournement et forment des doigts, dits doigts de traction, rigides et, avantageusement, l'âme de ladite rondelle élastique est en matière élastomère et porte au moins deux doigts de traction rigides.

On appréciera ainsi qu'une bonne souplesse de la rondelle peut être obtenue ainsi qu'une bonne résistance à la traction.

Suivant une autre caractéristique lesdits doigts de traction sont de forme quadrangulaire et leurs tranches de pivotement et de retournement sont arrondies.

Ainsi un montage indifférent des doigts de traction dans l'âme peut être obtenu.

Suivant une autre caractéristique les doigts de retournement font saillie radialement par rapport à la périphérie interne de la rondelle et coopèrent avec une portée d'engagement et une portée de retournement ménagées sur la pièce d'attaque.

Les caractéristiques et avantages de l'invention ressortiront de la description qui va suivre à titre d'exemple, en référence aux dessins annexés sur lesquels

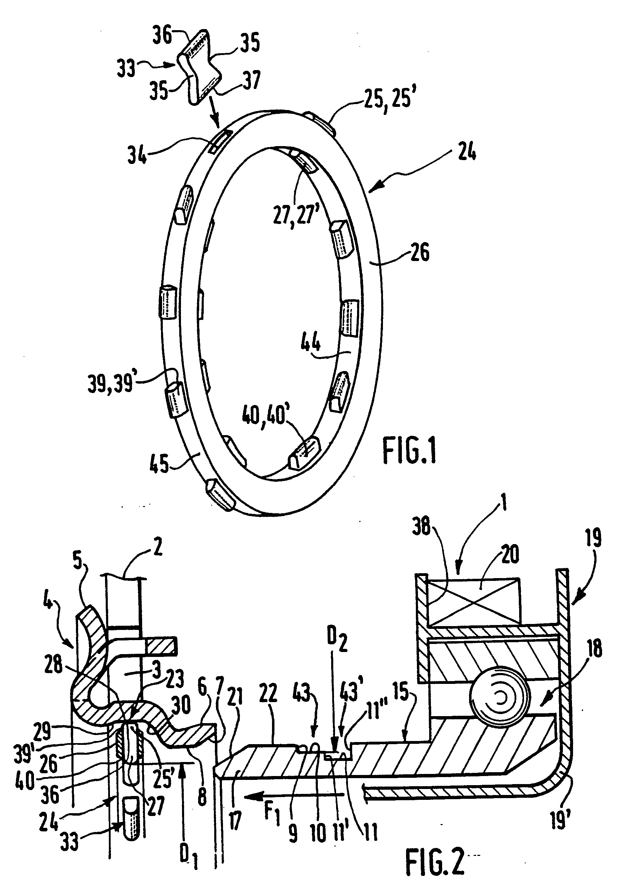

. la figure 1 est une vue de la rondelle élastique selon l'invention,

. la figure 2 est une demi-vue en coupe axiale du montage de la butée lors de l'approche de celle-ci,

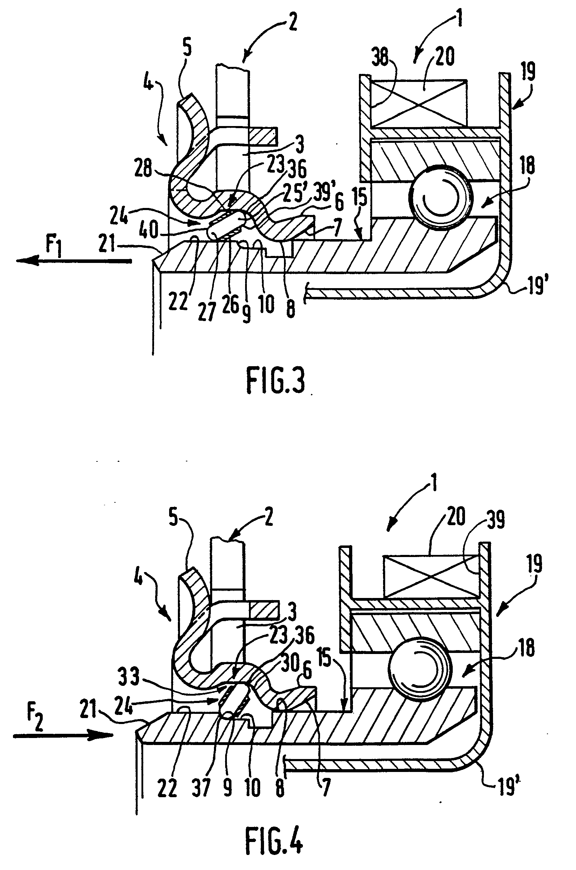

. la figure 3 est une vue analogue à la figure 2 mais pour une des phases de l'engagement de la butée dans la pièce d'accostage,

. la figure 4 est une vue analogue à la figure 2 mais pour la position montée,

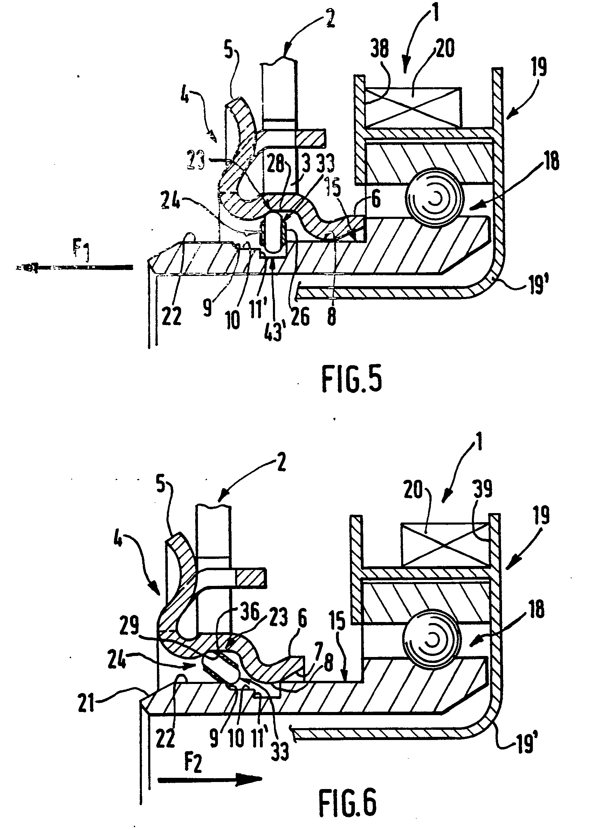

. la figure 5 est une vue analogue à la figure 2 mais après une surcourse de la butée,

. la figure 6 est une vue analogue à la figure 2 mais pour une des phases du désengagement de la butée.

Dans le mode de réalisation représenté, il s'agit d'atteler une butée de débrayage 1 au dispositif débrayeur 2 d'un quelconque embrayage à commander.

Le dispositif débrayeur 2 est ici formé par les extrémités des doigts radiaux d'un diaphragme, qui, ainsi qu'on le sait, comporte une partie périphérique formant rondelle Belleville, pour serrage d'au moins un disque de friction entre deux plateaux, et une partie centrale fragmentée en doigts radiaux pour constitution d'un dispositif débrayeur.

De manière connue en soi, par exemple par la sus mentionnée demande de brevet français 2 545 172, pour l'attelage de la butée de débrayage 1 au dispositif débrayeur 2, il est rapporté sur ce dernier, à la faveur de l'ouverture centrale 3 que celui-ci possède, une pièce 4, dite ici pièce d'accostage.

La butée de débrayage 1 comporte, d'une manière connue en soi, une pièce d'attaque 15 par laquelle elle est destinée à agir sur la pièce d'accostage 4. Ladite pièce d'attaque 15 est constituée, entre autres exemples, par le prolongement 17 de la bague interne d'un roulement à billes 18.

C'est sur l'une des ces pièces, pièce d'accostage ou pièce d'attaque qu'est rapporté, dans une gorge convenablement disposée, un organe de couplage.

Suivant l'invention cet organe de couplage comprend une rondelle élastique 24 comportant une périphérie radialement externe 45, une périphérie radialement interne 44 et une âme élastique 26.

A l'état libre, cette rondelle 24, montée dans la gorge de l'une des pièces, est saillante radialement vis-à-vis de la pièce qui la porte. Lors du montage, par l'extrémité de son bord périphérique libre, ladite rondelle vient au contact de la portée d'engagement ou de retournement de l'autre pièce et sous l'action d'une de ces portées et de par son âme élastique, prend la configuration désirée:

. convexe, pour le sens axial d'observation allant du dispositif débrayeur 2 à la butée 1, après contact avec la portée d'engagement et de ce fait permettant la liaison axiale entre les pièces,

. concave, pour le même sens axial d'observation, après contact avec la portée de retournement et de ce fait permettant le désaccouplement entre les pièces.

De plus, tel que visible à la figure 1, l'une au moins des périphéries de la rondelle 24 porte au moins deux doigts 39, 40, dits doigts de retournement, saillant radialement par rapport à ladite périphérie et de raideur supérieure à la partie élastique 26 de la rondelle 24. Les doigts de retournement 39 sont portés par la périphérie externe 45 quand la rondelle élastique 24 est montée dans une gorge de la pièce d'attaque 15 et les doigts de retournement 40 par la périphérie interne 44 quand ladite rondelle est montée dans une gorge de la pièce d'accostage 4.

A l'extrémité de ces doigts dont prévus des éléments 25, 27, dits éléments de retenue. Les éléments de retenue 25 des doigts 39, dans le cas où la rondelle élastique 24 est montée dans une gorge de la pièce d'attaque 15, sont, après montage, en contact avec une portée d'entraînement située sur la pièce d'accostage 4 et les éléments de retenue 27 des doigts 40, dans le cas où la rondelle élastique est montée dans une gorge de la pièce d'accostage 4, sont, après montage, en contact avec une portée d'entraînement située sur la pièce d'attaque 15.

Selon l'invention, l'une au moins des périphéries de la rondelle 24 porte au moins deux doigts 39', 40', dits doigts de pivotement, saillant par rapport à ladite périphérie et de raideur supérieure à la partie élastique 26 de la rondelle 24. Les doigts de pivotement 39′ sont portés par la périphérie externe 45 quand la rondelle élastique 24 est montée dans une gorge la pièce d'accostage 4 et les doigts de pivotement 40′ par la périphérie interne 44 quand ladite rondelle 24 est portée dans une gorge de la pièce d'attaque 15.

A l'extrémité de ces doigts sont prévus des éléments 25′, 27′, dits éléments de retenue, Les éléments de retenue 25′, des doigts 39′, dans le cas où la rondelle élastique 24 est montée dans une gorge de la pièce d'accostage 4, sont, après montage, en contact avec le fond de ladite gorge et les éléments de retenue 27′ des doigts 40′, dans le cas où la rondelle élastique est montée dans une gorge de la pièce d'attaque 15, sont, après montage en contact avec le fond de ladite gorge.

Selon l'invention, les doigts de pivotement 39′, 40′, font saillie radialement de la périphérie de la rondelle élastique opposée à celle de la périphérie qui porte les doigts de retournement 39, 40.

De plus, à l'extrémité de ces doigts de pivotement 39′, 40′, sont prévus des éléments de retenue 25′, 27′ qui sont des éléments de retenue opposés radialement aux éléments de retenue 25, 27 des doigts de retournement 39, 40.

Tels que représentés à la figure 1, les doigts de retournement 39, 40 et leurs éléments de retenue 25, 27 sont d'un seul tenant avec les doigts de pivotement 39′, 40′ et leurs éléments de retenue 25′, 27′ en formant des doigts de traction 33 rigides et l'âme 26 de la rondelle 24 est en matière élastomère. Comme mieux visible à la figure 1, cette âme 26 est dotée d'évidements 34 pour logement des doigts de traction 33, par exemple métalliques, et constitue ainsi une cage pour ceux-ci. Plus précisément ces doigts métalliques 33 sont globalement des blocs de forme quadrangulaire et d'épaisseur constante, en étant évidés dans le sens de la longueur en 35. Ainsi, ces doigts 33 ont globalement une forme de diabolo et sont engagés ici à force dans les évidements 34 de moindre largeur. On appréciera que les évidements latéraux 35 des doigts 33 favorisent un bon maintien de ceux-ci avec l'âme 26. Ici, les doigts 33 ont une hauteur supérieure à leur épaisseur.

En effet, lors de l'enfoncement des doigts 33 dans les évidements 34, l'élastomère de l'âme 26 remplit, par fluage, les évidements 35 et assure ainsi un blocage des doigts 33.

On notera que les tranches 36, 37 des doigts 33 sont arrondies, lesdites tranches étant propres à s'appuyer sur les portées d'entraînement des pièces à solidariser.

La rondelle élastique telle que décrite ci-dessus, est montée entre autres possibilités sur la pièce d'accostage 4.

Comme visible sur les figures, la pièce d'accostage 4 présente une collerette d'appui 5 pour action sur le dispositif débrayeur 2 et d'un seul tenant avec celle-ci, une douille 6, qui, s'étendant globalement axialement, traverse le dispositif débrayeur 2 à la faveur de l'ouverture 3.

Cette douille 6 forme, du côté de la butée de débrayage 1, par l'extrémité de sa surface interne, une portée tronconique de montage 7 dont la concavité est tournée vers ladite butée et à la suite de cette portée tronconique 7 se trouve une portée de centrage 8, qui se raccorde à une gorge de retenue 23. Cette gorge 23 possède un fond plat 28 et de part et d'autre de celui-ci deux parois latérales 29, 30 ou flancs.

Cette gorge 23 reçoit la rondelle élastique 24 qui établit la liaison axiale avec la butée de débrayage 1.

La butée de débrayage 1 comporte donc la pièce d'attaque 15 constituée par le prolongement 17 du roulement à billes 18, ledit roulement est attelé axialement à un élément de manoeuvre représenté schématiquement en 19, sur lequel agissent les extrémités des doigts 20 d'une fourchette de débrayage. Cet élément de manoeuvre est lié à un manchon 19′ pour coulissement, par exemple, sur une trompette de débrayage entourant l'arbre d'entrée de la boîte de vitesses.

A son extrémité libre, la pièce d'attaque 15 est dotée d'une portée d'engagement 21, de forme complémentaire à celle de la portée tronconique de montage 7 de la douille 6, ladite portée d'engagement 21 est prolongée par une portée de guidage 22, de diamètre légèrement inférieur à celui de la portée de centrage 8 de la douille 6.

C'est dans cette portée de guidage 22 qu'est pratiquée une gorge de réception 43 pour réception de la rondelle élastique 24.

Cette gorge de réception 43 comporte une portée d'entraînement profilée 9 dont la section est globalement en forme de quart de cercle et se raccorde par une de ses extrémités à la portée de guidage 22.

Cette portée d'entraînement 9 fait suite, par son autre extrémité, à une portée cylindrique 10, de diamètre D2, en étant disposée en bout de celle-ci.

Cette portée 10 est parallèle à une portée cylindrique 11, de plus faible diamètre que le diamètre D2 mais de plus grand diamètre que le diamètre D1 intérieur de la rondelle 24 à l'état libre, qui se raccorde par une paroi transversale 11′ à la portée 10 et à la portée de guidage 22 par une paroi transversale 11″ plus haute que la paroi 11′. Ladite paroi 11′ forme une portée de retournement de manière décrite ci-après.

Ainsi l'ensemble 11, 11′, 11″ constitue une deuxième gorge 43′ qui avec la gorge 43 forme une gorge étagée.

Comme visible sur les exemples de réalisations de figures 2, 3, 4, 5 et 6 la rondelle 24 est donc logée au moins partiellement dans la gorge 23 en faisant saillie, à l'état libre, radialement vers l'intérieur vis-à-vis de la pièce d'accostage 4, en créant un diamètre intérieur D1.

Selon l'invention cette rondelle élastique 24, après contact de sa périphérie libre avec la portée d'engagement 21, prend une configuration, ici convexe, pour le sens axial d'observation allant du dispositif débrayeur 2 à la butée 1, et de ce fait assure la liaison axiale lors de l'opération de montage telle que définie ci-après et une autre configuration, ici concave, pour le même sens axial d'observation, après contact de sa périphérie libre avec la portée de retournement 11', de diamètre plus grand que le diamètre D1 de la rondelle 24 et permet ainsi un désaccouplement lors de l'opération de démontage, telle que définie ci-après, de la butée 1 et de la pièce d'accostage 4. La périphérie libre de la rondelle 24 et les portées 21 et 11' constituent ici les moyens de retournement.

Le montage est effectué de la manière suivante:

Dans la première phase, telle que représentée à la figure 2, la rondelle élastique 24, engagée dans la gorge 23, est en appui par la tranche 36 de la partie saillante extérieure des doigts 33, constitués selon l'invention par les doigts de pivotement 39' et les éléments de retenue 25's'y rattachant en formant une pièce monobloc, contre le fond plat 28 de ladite gorge, en étant globalement plane dans un plan normal à l'axe. Lors du rapprochement suivant la flèche F1 de la figure 2, de la butée de débrayage 1, par rapport à la pièce d'accostage 4, en aveugle, par appui des doigts 20 de la fourchette contre la face 38 que comporte l'élément de manoeuvre 19, la portée d'engagement 21 de la pièce d'attaque 15 effectue un centrage par rapport à la portée de montage 7 de la pièce d'accostage 4, puis, après poursuite du mouvement, la pièce d'attaque étant centrée par rapport à la pièce d'accostage 4 par les portées de centrage respectives 22 et 8, ladite portée d'engagement 21 rencontre la partie saillante intérieurement des doigts 33, constitués selon l'invention par les doigts de retournement 40 et les éléments de retenue 27 s'y rattachant en formant une pièce monobloc.

Le contact avec la portée d'engagement provoque un basculement de la rondelle élastique 24, par pivotement sur le fond plat 28 de la gorge 23, des doigts 33 autour de leurs tranches 36, l'âme 26 de ladite rondelle travaillant en torsion entre deux doigts 33, puis, comme représenté à la figure 3, au cours de la poursuite du mouvement selon la flèche F1, un passage de ladite rondelle sur la portée de guidage 22 de la pièce d'attaque 15.

Le mouvement est poursuivi avec une surcourse jusqu'à ce que la rondelle 24 se trouve, au-delà de la portée d'entraînement 9, le long de la portée 10 de la pièce d'attaque 15. La rondelle est globalement, dans cette position de montage, convexe pour le sens d'observation allant du dispositif débrayeur 2 à la butée 1.

Un mouvement est effectué, suivant la flèche F2 de la figure 4, par appui des doigts de la fourchette 20 contre la face d'appui 39 de d'élément de manoeuvre 19.

On arrive ainsi à la position de la figure 4 ou les doigts 33 sont en appui par leur tranche 37 contre la portée d'entraînement 9 et contre la face de la gorge 23 par leurs tranches 36.

Lors de l'opération de montage il peut se produire une surcourse de la butée 1 par rapport à la pièce d'accostage 4, c'est-à-dire, telle que représentée à la figure 5, la partie saillante radialement intérieurement des doigts 33 étant en contact soit avec la portée d'entraînement 9 ou la portée 10 de la pièce d'attaque 15, que le mouvement se poursuit jusqu'à ce que la partie saillante radialement intérieurement des doigts 33 quitte la portée 10 et vienne au-delà de la portée de retournement 11' de la pièce d'attaque 15 et de par l'absence de portée sur ladite pièce d'attaque et sous l'action de son âme élastique 26, la rondelle 24 reprend sa position initiale plane dans la gorge 43', la partie saillante radialement vers l'extérieur des doigts 33 étant au contact du fond 28 de la gorge 23.

On notera que lorsque la douille 6 vient en appui contre la partie courante de la bague interne du roulement 18, l'opérateur, à cause d'une résistance plus élevée, sait qu'il doit arrêter son mouvement, démonter l'ensemble puis le remonter.

Pour démonter l'ensemble, monté convenablement c'est-à-dire les doigts 33 en appui par leur tranche sur leurs portées respectives, il suffit donc, de la position représentée figure 4, en premier lieu, d'arriver à la position représentée figure 5.

A partir de la figure 4 il suffit d'effectuer une surcourse, telle que décrite ci-dessus lors de l'opération de montage, par appui des doigts 20 de la fourchette sur la face d'appui 38 jusqu'à ce que la rondelle 24 reprenne sa position initiale plane dans la gorge 43', comme représenté à la figure 5.

Puis il suffit d'effectuer un mouvement un sens inverse, suivant la flèche F2 de la figure 6, par appui des doigts 20 de la fourchette contre la face d'appui 39; ceci entraîne un mouvement de retournement de la rondelle élastique 24 par contact de la portée transversale de retournement 11' avec la partie saillante radialement intérieurement des doigts 33, ladite rondelle devenant globalement concave pour le sens d'observation allant du dispositif débrayeur 2 à la butée de débrayage 1.

Le mouvement se poursuivant, la partie saillante radialement intérieurement des doigts 33 glisse sur les portées 10, 9, 22 et 21, tandis que la partie saillante extérieure des doigts 33, vient en appui, par leurs tranches 36, contre la face 29 de la gorge 23.

Une libération de la pièce d'accostage par rapport à la butée est ainsi réalisée.

Ainsi qu'on l'aura compris, la forme de la gorge 23 facilite le basculement de la rondelle 24 et permet le logement de celle-ci, notamment dans les positions de celles des positions des figures 3 et 6. En outre le nombre de blocs 33 (10 dans l'exemple représenté) dépend de l'effort de traction à transmettre.

De même, il ressort à l'évidence de la description que le diamètre D2 de la portée cylindrique 10 doit être supérieur au diamètre D1 externe de la rondelle 24 à l'état libre lorsqu'elle est engagée dans la gorge 23, c'est-à-dire au diamètre interne des doigts 33 en appui par leur tranche 36 contre le fond plate 28 de ladite gorge.

On appréciera que les portées de basculement 11' et d'engagement 21 ne risquent pas d'endommager l'âme en élastomère 26, qui facilite le montage de la rondelle 24 dans la gorge 23 bar basculement et expansion radiale de celle-ci.

Bien entendu, la présente invention n'est pas limitée aux exemples de réalisations décrits.

En particulier les doigts 33 peuvent être surmoulés avec l'âme 26 ou "adhérisés" à celle-ci par vulcanisation in situ. Lorsque les efforts de traction ne sont pas très importants la rondelle peut être entièrement métallique.

De même, les blocs peuvent avoir des tranches 37, 36 épousant respectivement le profil de la gorge 23 et de la portée d'entraînement 9.

On notera que dans ce cas, contrairement au mode de réalisation représenté, le montage des doigts 33 ne peut se faire de manière indifférente. Enfin les flancs 29 et 30 de la gorge peuvent être arrondis.

## Revendications

1. Montage de butée de débrayage, du genre comportant, pour l'attelage d'une butée de débrayage (1) au dispositif débrayeur (2) d'un embrayage, une pièce (4), dite ici pièce d'accostage (4), qui est convenablement rapportée sur ledit dispositif débrayeur (2), et des moyens de solidarisation en traction (24), qui, établis entre ladite pièce d'accostage (4) et une pièce (15), dite ici pièce d'attaque (15), appartenant à la butée de débrayage (1), sont propres à assurer une liaison axiale entre lesdites pièces, pièce d'accostage (4) et pièce d'attaque (15), dans le sens axial allant du dispositif débrayeur (2) à ladite butée de débrayage (1), lesdits moyens de solidarisation en traction comportant, d'une part, un organe de couplage (24) déformable, qui est, au moins partiellement, engagé radialement dans une gorge (23) ménagée pour lui sur l'une desdites pièces, pièce d'accostage (4) ou pièce d'attaque (15), en faisant saillie radialement vis-à-vis de ladite pièce, à l'état libre, et, d'autre part une portée d'entraînement (9) qui est ménagée globalement transversalement sur l'autre desdites pièces et avec laquelle ledit organe de couplage (24) coopère axialement en appui dans le sens considéré, caractérisé en ce que l'organe de couplage comprend une rondelle élastique (24), comportant une périphérie radialement externe (45) et une périphérie radialement interne (44), apte à prendre au moins deux configurations, la première pour laquelle elle est globalement convexe, pour le sens axial d'observation allant du dispositif débrayeur (2) à ladite butée (1), l'autre pour laquelle elle est globalement concave, pour le même sens axial d'observation et des moyens de retournement aptes à faire passer ladite rondelle, d'une configuration, permettant la liaison axiale entre lesdites pièces, à une autre configuration permettant le désaccouplement entre ces pièces.

2. Montage de butée de débrayage selon la revendication 1, caractérisé en ce que l'organe de couplage comprend une rondelle élastiquement déformable (24), comportant une périphérie radialement externe (45) une périphérie radialement interne (44) et une âme élastique (26).

3. Montage de butée de débrayage selon les revendications 1 et 2, caractérisé en ce que ladite rondelle élastiquement déformable (24) présente au moins deux doigts (39, 40), dits doigts de retournement, saillants par rapport à l'une au moins de ses périphéries (44, 45).

4. Montage de butée de débrayage selon la revendication 3, caractérisé en ce que la rondelle élastiquement déformable (24) présente au moins deux doigts (39', 40'), dits doigts de pivotement, saillants par rapport à l'une au moins de ses périphéries (44, 45).

5. Montage de butée de débrayage selon la revendication 4, caractérisé en ce que lesdits doigts de retournement (39, 40) et lesdits doigts de pivotement (39', 40') sont saillants par rapport aux périphéries (44, 45) de ladite rondelle élastiquement déformable (24), les doigts de pivotement (39', 40') faisant saillie à la périphérie de ladite rondelle (24) opposée à celle qui porte les doigts de retournement (39, 40).

6. Montage de butée de débrayage selon l'une des revendications 3 à 5, caractérisé en ce que lesdits doigts (39, 40, 39', 40') sont de raideur supérieure à l'âme élastique (26) de ladite rondelle élastiquement déformable (24).

7. Montage de butée de débrayage selon l'une des revendications 3 à 6, caractérisé en ce que des éléments (25, 27), dits éléments de retenue, destinés à coopérer avec des portées aménagées sur chacune desdites pièces (4, 15), sont portés par lesdits doigts de retournement (39, 40) et/ou par lesdits doigts de pivotement (39', 40').

8. Montage de butée de débrayage selon l'une des revendications 4 à 7, caractérisé en ce que lesdits doigts de pivotement (39', 40') sont d'un seul tenant avec lesdits doigts de retournement (39, 40) et forment des doigts (33), dits doigts de traction, rigides et en ce que l'âme (26) de la rondelle élastique (24) est en matière élastomère et porte lesdits doigts de traction.

9. Montage de butée de débrayage selon la revendication 8, caractérisé en ce que lesdits doigts de traction (33) sont de forme quadrangulaire et leurs tranches (36, 37) arrondies.

10. Montage de butée de débrayage selon la revendication 8 ou 9, caractérisé en ce que l'âme élastique (26), en matière élastomère, de la rondelle élastique (24), est dotée d'évidements pour logement desdits doigts de traction (33).

11. Montage de butée de débrayage selon l'une des revendications précédentes, caractérisé en ce que l'organe de couplage (24) est engagé sur la pièce qui le porte dans une gorge (23), dite gorge de retenue (23), entre deux parois latérales (29, 30).

12. Montage de butée de débrayage selon la revendication 11, caractérisé en ce que l'organe de couplage étant sur la pièce d'accostage (4), les doigts de pivotement (39', 40') font saillie radialement de la périphérie externe (45) de la rondelle élastiquement déformable (24) en étant logés dans la gorge de retenue (23) de ladite pièce d'accostage (4), et, en ce que, les doigts de retournement (40) font saillie radialement par rapport à la périphérie interne (44) de la rondelle élastiquement déformable (24) et sont propres à coopérer avec une portée d'engagement (21) et une portée de retournement (11') ménagées sur la pièce d'attaque (15).

**Patentansprüche**

1. Zusammenbau eines Kupplungsausrücklagers von der Art, die für die Ankopplung eines Kupplungsausrücklagers (1) an die Ausrückvorrichtung (2) einer Kupplung ein Stück (4) enthält, welches hier als Kopplungsstück (4) bezeichnet wird und auf zweckmäßige Weise an der genannten Ausrückvorrichtung (2) befestigt ist, sowie Zugverbindungsmittel (24), die, zwischen dem genannten Kopplungsstück (4) und einem Stück (15) angeordnet, welches hier als Antriebsstück (15) bezeichnet wird und zum Kupplungsausrücklager (1) gehört, geeignet sind, eine axiale Verbindung zwischen den genannten Stücken, nämlich dem Kopplungsstück (4) und dem Antriebsstück (15) in der axialen Richtung herzustellen, die von der Ausrückvorrichtung (2) zum genannten Kupplungsausrücklager (1) verläuft, wobei de genannten Zugverbindungsmittel einerseits ein verformbares Verbindungsorgan (24) aufweisen, welches zumindest teilweise radial in eine Rille (23) eingreift, die dafür an einem der genannten Stücke, dem Kopplungsstück (4) oder dem Antriebsstück (15), vorgesehen ist und im freien Zustand radial zum genannten Stück vorspringt, und andererseits eine Antriebsfläche (9), die im wesentlichen in Querrichtung an dem anderen der genannten Stücke angebracht ist und womit das genannte Verbindungsorgan (24) axial zusammenwirkt und in der betreffenden Richtung aufliegt, dadurch gekennzeichnet, daß das Verbindungsorgan eine Federscheibe (24) enthält, die eine radial außenliegende Peripherie (45) und radial innenliegende Peripherie (44) aufweist und wenigstens zwei Konfigurationen annehmen kann, von denen die erste, von der Ausrückvorrichtung (2) zum genannten Ausrücklager (1) betrachtet, im wesentlichen konvex und die andere, in gleicher Längsrichtung betrachtet, im wesentlichen konkav ist, sowie Rücklaufmittel, die geeignet sind, die genannte Scheibe aus einer Konfiguration, die eine axiale Verbindung zwischen den genannten Stücken ermöglicht, in eine andere Konfiguration zu bewegen, die ein Auskuppeln dieser Stücke ermöglicht.

2. Zusammenbau eines Kupplungsausrücklagers nach Anspruch 1, dadurch gekennzeichnet, daß das Verbindungsorgan eine elastisch verformbare Scheibe (24) enthält, die eine radial außenliegende Peripherie (45) und eine radial innenliegende Peripherie (44) sowie einen elastischen Kern (26) aufweist.

3. Zusammenbau eines Kupplungsausrücklagers nach den Ansprüchen 1 und 2, dadurch gekennzeichnet, daß die genannte, elastisch verformbare Scheibe (24) wenigstens zwei Finger (39, 40) aufweist, die als Rückholfinger bezeichnet werden und im Verhältnis zu wenigstens einer der Peripherien (44, 45) vorspringen.

4. Zusammenbau eines Kupplungsausrücklagers nach Anspruch 3, dadurch gekennzeichnet, daß die elastisch verformbare Scheibe (24) wenigstens zwei Finger (39', 40') aufweist, die als Schwenkfinger bezeichnet werden und im Verhältnis zu wenigstens einer der Peripherien (44, 45) vorspringen.

5. Zusammenbau eines Kupplungsausrücklagers nach Anspruch 4, dadurch gekennzeichnet, daß die genannten Rückholfinger (39, 40) und die genannten Schwenkfinger (39', 40') im Verhältnis zu den Peripherien (44, 45) der genannten, elastisch verformbaren Scheibe (24) vorspringen, wobei die Schwenkfinger (39', 40') an der Peripherie der genannten Scheibe (24) vorspringen, die derjenigen mit den Rückholfingern (39, 40) gegenüberliegt.

6. Zusammenbau eines Kupplungsausrücklagers nach einem der Ansprüche 3 bis 5, dadurch gekennzeichnet, daß die genannten Finger (39, 40, 39', 40') eine größere Steifigkeit aufweisen als der elastische Kern (26) der genannten, elastisch verformbaren Scheibe (24).

7. Zusammenbau eines Kupplungsausrücklagers nach einem der Ansprüche 3 bis 6, dadurch gekennzeichnet, daß Elemente (25, 27), die sogenannten Halteelemente, welche dazu bestimmt sind, mit Flächen an jedem der Stücke (4, 15) zusammenzuwirken, auf den genannten Rückholfingern (39, 40) und/oder den genannten Schwenkfingern (39', 40') aufliegen.

8. Zusammenbau eines Kupplungsausrücklagers nach einem der Ansprüche 4 bis 7, dadurch gekennzeichnet, daß die genannten Schwenkfinger (39', 40') aus einem Stück mit den genannten Rückholfingern (39, 40) bestehen und starre Finger (33), die sogenannten Zugfinger, bilden, und daß der Kern (26) der Federscheibe (24) aus Elastomermaterial besteht und die genannten Zugfinger trägt.

9. Zusammenbau eines Kupplungsausrücklagers nach Anspruch 8, dadurch gekennzeichnet, daß die genannten Zugfinger (33) vierkantig und ihre Ränder (36, 37) abgerundet sind.

10. Zusammenbau eines Kupplungsausrücklagers nach Anspruch 8 oder 9, dadurch gekennzeichnet, daß der elastische Kern (26) aus Elastomermaterial der Federscheibe (24) mit Aussparungen zur Aufnahme der genannten Zugfinger (33) versehen ist.

11. Zusammenbau eines Kupplungsausrücklagers nach einem der vorherigen Ansprüche, dadurch gekennzeichnet, daß das Verbindungsorgan (24) an dem Stück, das es trägt, in einer Rille (23), der sogenannten Halterille (23), zwischen zwei Seitenwänden (29, 30) eingreift.

12. Zusammenbau eines Kupplungsausrücklagers nach Anspruch 11, dadurch gekennzeichnet, daß das Verbindungsorgan am Kopplungsstück (4) angebracht ist und die Schwenkfinger (39', 40') radial an der außenliegenden Peripherie (45) der elastisch verformbaren Scheibe (24) vorspringen und in der Halterille (23) des genannten Kopplungsstücks (4) einrasten, und daß die Rückholfinger (40) im Verhältnis zur Innenperipherie (44) der elastisch verformbaren Scheibe (24) radial vorspringen und geeignet sind, mit einer Eingriffsfläche (21) und einer Rücklauffläche (11') zusammenzuwirken, die am Antriebsstück (15) vorgesehen sind.

**Claims**

1. A clutch actuating assembly, of the kind comprising, for coupling a clutch release head (1) to the releasing member (2) of a clutch, a member (4), here referred to as a main coupling member (4), which is appropriately mounted on the said clutch releasing member (2), and tractive coupling means (24), which, being arranged between the said main coupling member (4) and a member (15), here referred to as an actuating member (15), which is part of the clutch release head (1), are adapted to effect axial coupling between the said members, namely the main coupling member (4) and the actuating member (15), in the axial direction going from the clutch releasing member (2) towards the said clutch actuating assembly (1), the said tractive coupling means comprising, firstly a deformable coupling member (24) which is at least partially engaged radially in a groove (23) formed for it in one of the said members, namely the main coupling member (4) or the actuating member (15), with the coupling member projecting radially with respect to the said member in the unstressed state, and secondly a thrust surface (9) which is formed generally transversely on the other one of the said members, and with which the said coupling member (24) cooperates axially in abutting engagement in the said direction, characterised in that the coupling member comprises a resilient ring (24) having a radially outer periphery (45) and a radially inner periphery (44), and is adapted to adopt at least two configurations, in a first of which it is generally convex in the axial direction of observation going from the clutch releasing member (2) towards the said actuating assembly (1), and in the other of which configurations it is generally concave in the same axial direction of observation, the coupling member further comprising turnover means adapted to cause the said ring to change from one configuration, in which axial coupling between the said members is permitted, to another configuration in which uncoupling of the said members from each other can take place.

2. A clutch actuating assembly according to Claim 1, characterised in that the coupling member comprises a resiliently deformable ring (24), having a radially outer periphery (45), a radially inner periphery (44) and a resilient body.

3. A clutch actuating assembly according to Claims 1 and 2, characterised in that the said resiliently deformable ring (24) includes at least two fingers (39, 40) referred to as turnover fingers, which project with respect to at least one of its peripheries (44, 45).

4. A clutch actuating assembly according to Claim 3, characterised in that the resiliently deformable ring (24) has at least two fingers (39', 40'), known as pivot fingers, which project with respect to at least one of its peripheries (44, 45).

5. A clutch actuating assembly according to Claim 4, characterised in that the said turnover fingers (39, 40) and the said pivot fingers (39', 40') project with respect to the peripheries (44, 45) of the said resiliently deformable ring (24), with the pivot fingers (39', 40') projecting from the periphery of the said ring (24) opposite to that which carries the turnover fingers (39, 40).

6. A clutch actuating assembly according to one of Claims 3 to 5, characterised in that the said fingers (39, 40, 39', 40') are stiffer than the resilient body (26) of the said resiliently deformable ring (24).

7. A clutch actuating assembly according to one of Claims 3 to 6, characterised in that elements (25, 27), referred to as retaining elements and adapted to cooperate with surfaces formed on each of the said members (4, 15), are carried by the said turnover fingers (39, 40) and/or by the said pivot fingers (39', 40').

8. A clutch actuating assembly according to one of Claims 4 to 7, characterised in that the said pivot fingers (39', 40') are integral with the said turnover fingers (39, 40) to constitute rigid fingers (33) referred to as traction fingers, and in that the body (26) of the resilient ring (24) is made of an elastomeric material and carries the said traction fingers.

9. A clutch actuating assembly according to Claim 8, characterised in that the said traction fingers (33) are quadrangular in shape, their edges (36, 37) being rounded.

10. A clutch actuating assembly according to Claim 8 or 9, characterised in that the resilient body (26), of elastomeric material, of the resilient ring (24), is provided with openings for accommodating the said traction fingers (33).

11. A clutch actuating assembly according to one of the preceding claims, characterised in that the coupling member (24) is engaged, on the member by which it is carried, in a groove (23) referred to as a retaining groove (23), between two lateral walls (29, 30).

12. A clutch actuating assembly according to Claim 11, characterised in that, the coupling member being mounted on the main coupling member (4), the pivot fingers (39', 40') project radially from the outer periphery (45) of the resiliently deformable ring (24) and are engaged in the retaining groove (23) of the said main coupling member (4), and in that the turnover fingers (40) project radially with respect to the inner periphery (44) of the resiliently deformable ring (24) and are adapted to cooperate with an engagement surface (21) and a turnover surface (11') formed on the actuating member (15).

FIG.1

FIG.2

FIG.3

FIG.4

FIG.5

FIG.6